# DEMANDE DE BREVET EUROPEEN

(11) **EP 2 752 646 A2**
(43) Date de publication de la demande: **09.07.2014**
(21) Numéro de dépôt: 14150480.3
(22) Date de dépôt: 08.01.2014
(51) Int. Cl.: G01H 3/12

(54) **Dispositifs passifs d'acquisition acoustique large bande et systèmes passifs d'imagerie acoustique large bande**

(30) Priorité: 08.01.2013 FR 1350159
(71) Demandeur: ACB Engineering, 95220 Herblay (FR)
(72) Inventeur: Benoit, Vincent, 95220 Herblay (FR); Corbeau, Christian, 78320 Le Mesnil Saint Denis (FR)
(74) Mandataire: Derambure Conseil

(57) **Abrégé**

Dispositif passif d'acquisition acoustique large bande (3) pouvant communiquer avec une unité de traitement numérique (4), le dispositif comportant une pluralité de capteurs microphoniques (7) pouvant générer un signal électrique (8) représentatif d'une pression acoustique (9) reçue, une électronique de conditionnement et de numérisation (12) des signaux électriques pouvant adapter les signaux électriques et les transformer en signaux numériques (13) de pression acoustique, une électronique de transfert (14) pouvant communiquer avec une unité de traitement numérique (4) et permettre le transfert des signaux numériques de pression acoustique à l'unité de traitement numérique. Les capteurs microphoniques et l'électronique de transfert sont montés sur un élément support rigide multifonctionnel (17) intégrant l'électronique de conditionnement et de numérisation.

## Description

L'invention est relative aux dispositifs passifs d'acquisition acoustique large bande et aux systèmes passifs d'imagerie acoustique large bande fonctionnant dans la zone fréquentielle audible communément définie de 20 Hz à 20 000 Hz.

En particulier, les dispositifs et systèmes selon l'invention sont sensiblement différents des systèmes acoustiques ultrasonores tels que ceux utilisés par exemple en échographie, ces derniers fonctionnant à beaucoup plus haute fréquence et étant usuellement des systèmes actifs qui émettent des signaux acoustiques dans la zone d'observation.

Les dispositifs et systèmes selon l'invention sont ainsi plus proches, dans leur utilisation et principe général de fonctionnement, d'une caméra thermique.

Plus particulièrement, l'invention se rapporte à un dispositif d'acquisition acoustique large bande apte à communiquer avec une unité de traitement numérique, le dispositif comportant
une pluralité de capteurs microphoniques, chacun des capteurs étant apte à générer un signal électrique représentatif d'une pression acoustique reçue par ledit capteur microphonique,
une électronique de conditionnement et de numérisation des signaux électriques apte à adapter les signaux électriques générés par les capteurs microphoniques et à les transformer en signaux numériques de pression acoustique,
une électronique de transfert apte à communiquer avec une unité de traitement numérique et permettre le transfert des signaux numériques de pression acoustique à ladite unité.

Sont bien connus de l'état de la technique des antennes acoustiques large bande comportant un grand nombre de capteurs microphoniques.

De telles antennes acoustiques sont usuellement munies d'une cinquantaine à plusieurs centaines de capteurs microphoniques et sont portées par une structure rigide souvent fixée sur un ou plusieurs pieds.

Le document US 5,838,284 décrit un exemple d'une telle antenne acoustique comportant une centaine de capteurs microphoniques arrangés pour former une structure en spirale.

Des électroniques généralistes de conditionnement et de numérisation des signaux électriques sont également connus de l'état de la technique et consistent en une succession de modules reliés à l'antenne par un ou plusieurs câbles de grosse section. Ces modules permettent l'isolation galvanique et l'excitation des capteurs microphoniques passifs ainsi que l'amplification, le préfiltrage et la numérisation des signaux électriques issus des capteurs.

Les électroniques de conditionnement et de numérisation comportent habituellement une chaîne d'acquisition complète pour chaque capteur microphonique de l'antenne acoustique et sont donc d'une taille et d'un encombrement important, constituant usuellement un ensemble de plusieurs kilogrammes à plusieurs dizaines de kilogrammes.

Ainsi, les dispositifs et les systèmes passifs d'imagerie acoustique sont présentement conçus comme des dispositifs de taille respectable devant être opérés de la façon suivante :
un opérateur choisit une position pour l'antenne acoustique de façon à la diriger vers une zone de l'objet à examiner, et installe l'antenne sur son ou ses supports ;
l'opérateur connecte et dispose ensuite, selon un agencement de type bureautique, les éléments du système de conditionnement et de numérisation ainsi que l'unité de traitement numérique qui est habituellement un ordinateur portable ;
enfin, l'opérateur réalise l'imagerie acoustique de la zone de l'objet à examiner.

Si une exploration spatiale est nécessaire par exemple pour examiner différentes zones de l'objet, l'opérateur choisit successivement plusieurs emplacements pour l'antenne acoustique et la déplace avec son support aux différents emplacements avant de réitérer la mesure.

Lorsque les emplacements sont éloignés les uns des autres, par exemple lors de l'examen d'objets ou de structures de grande taille, il peut être nécessaire de déplacer et redéployer aux différents emplacements l'ensemble du système comprenant l'électronique de conditionnement et de numérisation ainsi que l'unité de traitement numérique.

Pour simplifier cette opération, il est connu de permettre de déplacer uniquement l'antenne acoustique autour de l'objet à examiner, l'antenne acoustique étant reliée à l'électronique de conditionnement et de numérisation par des câbles de grosse section suffisamment longs.

Un tel dispositif n'est cependant pas utilisable dans de nombreuses situations soit du fait d'une amplitude de déplacement trop limitée par les câbles, soit du fait de l'impossibilité même d'approcher sans danger des câbles de l'objet à examiner, par exemple si l'objet est en mouvement ou comprend des éléments en mouvements (éolienne, moteur à transmission, engrainement, espace robotisé, ...)

Le problème à la base de l'invention est de prévoir un tel dispositif passif d'acquisition acoustique et un tel système passif d'imagerie acoustique pouvant être déployé et opéré de façon simple et rapide.

Le problème à la base de l'invention est de prévoir un tel dispositif passif d'acquisition acoustique et un tel système passif d'imagerie acoustique pouvant être déplacé aisément et sans danger par un opérateur et en particulier pouvant fonctionner au cours du déplacement.

Le problème à la base de l'invention est de prévoir un tel dispositif passif d'acquisition acoustique et un tel système passif d'imagerie acoustique permettant l'exploration aisée et simplifiée de zones encombrées.

Ci-après, un exposé de l'invention telle que caractérisée dans les revendications.

Dans des modes de réalisation préférés de l'invention, on peut éventuellement avoir recours à l'une et/ou à l'autre des dispositions suivantes :
- la pluralité de capteurs microphoniques comprend un nombre de capteurs microphoniques supérieur ou égal à trois et inférieur ou égal à seize, le nombre de capteurs microphoniques étant de préférence supérieur ou égal à six et inférieur ou égal à douze, le nombre de capteurs microphoniques étant de préférence sensiblement égal à huit,
- pour tout premier capteur choisi parmi la pluralité de capteurs microphoniques et tout second capteur choisi parmi la pluralité de capteurs microphoniques, une distance maximale entre le premier capteur et le second capteur est inférieure ou égale à cinquante centimètres, ladite distance maximale étant de préférence inférieure ou égal à trente-cinq centimètres, ladite distance maximale étant de préférence sensiblement égale à vingt centimètres,
- pour tout premier capteur choisi parmi la pluralité de capteurs microphoniques et tout second capteur choisi parmi la pluralité de capteurs microphoniques, une distance minimale entre le premier capteur et le second capteur est supérieure ou égale à quatre centimètres,
- des capteurs parmi la pluralité de capteurs microphoniques sont sensiblement disposés sur un cercle,
- des capteurs parmi la pluralité de capteurs microphoniques sont disposés à l'intérieur dudit cercle,
- l'élément support rigide multifonctionnel comporte une pluralité de logements, et chaque capteur parmi la pluralité de capteurs microphoniques est monté dans un logement associé parmi la pluralité de logements,
- le dispositif passif d'acquisition acoustique comporte en outre au moins un capteur de distance intégré à l'élément support rigide multifonctionnel,
- le dispositif passif d'acquisition acoustique, comprend deux capteurs de distance optiques intégrés à l'élément support rigide multifonctionnel,
- l'élément support rigide multifonctionnel comporte un moyen d'association d'une unité de traitement numérique apte à fixer de façon rigide une unité de traitement numérique à l'élément support rigide multifonctionnel,
- l'élément support rigide multifonctionnel comporte une coque rigide dans laquelle est logée l'électronique de conditionnement et de numérisation,
- l'élément support rigide multifonctionnel comporte deux coques rigides fixées en regard l'une de l'autre et enfermant entre elles l'électronique de conditionnement et de numérisation,
- l'élément support rigide multifonctionnel est ajouré,
- l'élément support rigide multifonctionnel comporte un moyen de préhension apte à permettre la prise en main et le portage à une ou deux mains du dispositif d'acquisition acoustique, en particulier une ou des zones d'une ou des coques rigides,
- l'élément support rigide multifonctionnel comporte un moyen de fixation à un support externe, en particulier à un support tripode,
- l'électronique de transfert est soit une électronique de transfert filiaire comportant un connecteur et apte à communiquer avec l'unité de traitement numérique par un câble d'interconnexion, soit une électronique de transfert sans fil comportant une antenne ou un émetteur-récepteur optique et apte à communiquer avec l'unité de traitement numérique au moyen d'une liaison sans fil, en particulier d'une liaison sans fil radiofréquence ou d'une liaison sans fil optique,
- le dispositif passif d'acquisition acoustique comporte en outre une source d'alimentation électrique autonome intégrée à l'élément support rigide multifonctionnel, en particulier une batterie.

L'invention a également pour objet un système passif d'imagerie acoustique large bande d'une zone d'observation, le système comportant un dispositif passif d'acquisition acoustique tel que décrit ci-avant, une unité de traitement numérique adaptée pour recevoir des signaux numériques de pression acoustique du dispositif passif d'acquisition acoustique et pour déterminer et mémoriser, pour chacun des points d'une pluralité de points de la zone d'observation, au moins une valeur numérique de niveau de pression acoustique en ce point à partir des signaux numériques de pression acoustique, et un moyen d'affichage d'un maillage des valeurs numériques de niveau de pression acoustique associées à chaque point de la zone d'observation.

Dans des modes de réalisation préférés de l'invention, on peut éventuellement avoir recours en outre à l'une et/ou à l'autre des dispositions suivantes :
- l'unité de traitement numérique est fixée de façon rigide à l'élément support rigide multifonctionnel,
- le moyen d'affichage comporte un écran tactile apte à permettre la communication de commandes à l'unité de traitement numérique,
- le système passif d'imagerie acoustique comporte en outre un moyen d'acquisition d'images photographiques pour obtenir au moins une image photographique de la zone d'observation, et le moyen d'affichage est apte à afficher l'image photographique de la zone d'observation et le maillage des valeurs numériques de niveau de pression acoustique, en particulier sous forme d'une palette de couleurs ou de niveau de gris associée au maillage des valeurs numériques et superposée avec l'image photographique,

- un appareil mobile comporte l'unité de traitement numérique, le moyen d'affichage et le moyen d'acquisition d'images photographiques, l'appareil mobile comportant une source d'alimentation électrique autonome, en particulier une batterie,
- l'appareil mobile et la pluralité de capteur microphoniques sont respectivement disposés sur des faces opposées de l'élément support rigide multifonctionnel, et l'élément support rigide multifonctionnel comporte une ouverture traversante en regard du moyen d'acquisition d'images photographiques apte à permettre au moyen d'acquisition d'images photographiques d'acquérir une image de la zone d'observation,
- le dispositif passif d'acquisition acoustique est alimenté en énergie électrique par l'unité de traitement numérique,
- un encombrement d'épaisseur du système passif d'imagerie acoustique large bande est inférieur à vingt centimètres, de préférence inférieur à dix centimètres, de façon encore plus préférentielle inférieur à cinq centimètres.

Ainsi réalisés, le dispositif passif d'acquisition acoustique et le système passif d'imagerie acoustique sont compactes, portables, légers, aisés à utiliser, rapidement mis en place et à même de permettre l'exploration de zones encombrées.

D'autres caractéristiques et avantages de l'invention apparaîtront au cours de la description suivante de plusieurs de ses formes de réalisation, données à titre d'exemple non limitatif, en regard des dessins joints.

Sur les dessins :
- la figure 1 est une vue schématique en perspective d'un système passif d'imagerie acoustique et d'un dispositif passif d'acquisition acoustique selon un mode de réalisation de l'invention,
- la figure 2 est une vue schématique d'un éclaté du dispositif passif d'acquisition acoustique de la figure 1, et
- la figure 3 est un organigramme de fonctionnement d'un système passif d'imagerie acoustique selon un mode de réalisation de l'invention.

Sur les différentes figures, les mêmes références désignent des éléments identiques ou similaires.

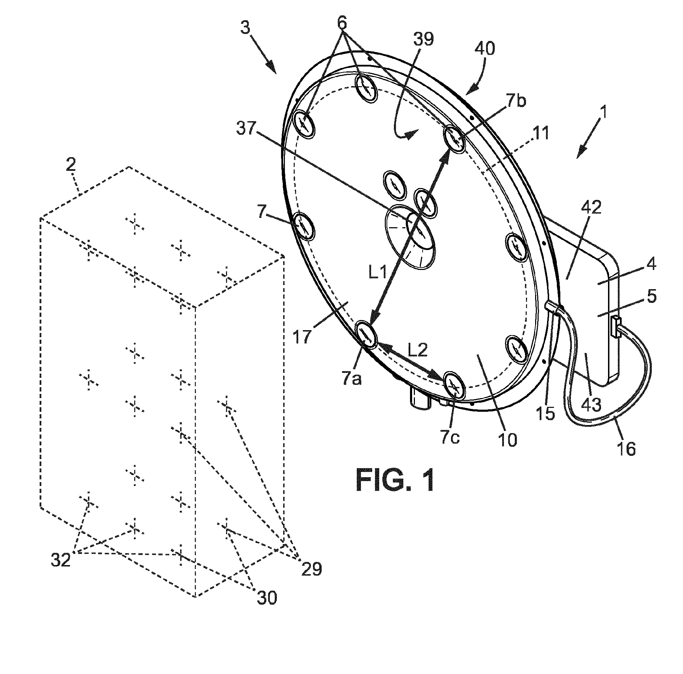

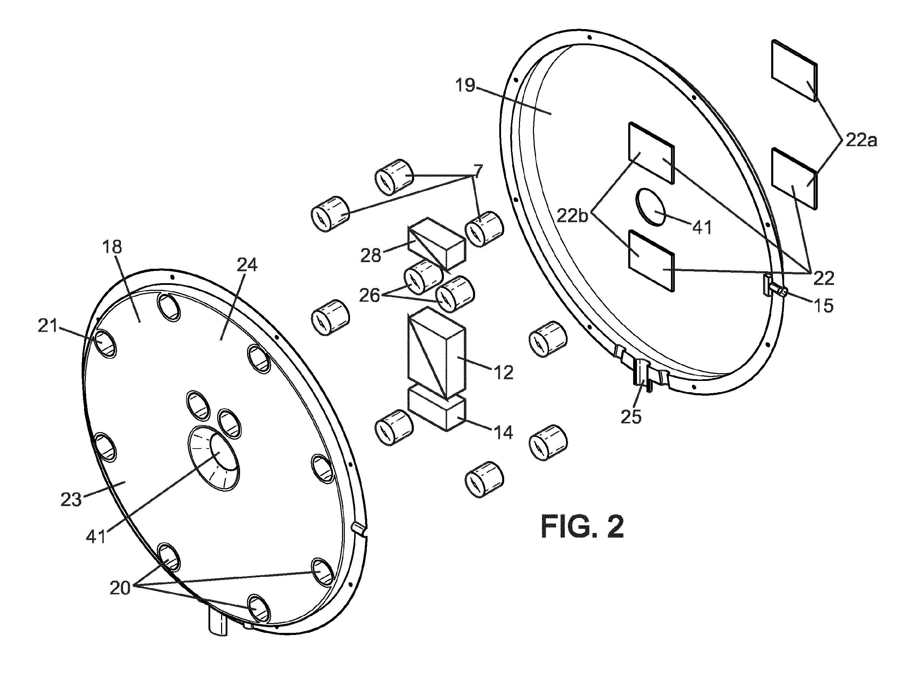

Les figures 1 à 3 montrent un système passif d'imagerie acoustique large bande 1 selon un premier mode de réalisation de l'invention.

Un tel système est apte à fonctionner dans la zone fréquentielle audible communément définie de 20 Hz à 20 000 Hz et permet de réaliser l'imagerie acoustique d'une zone d'observation 2.

Le système 1 est passif, c'est-à-dire qu'il est apte à réaliser l'imagerie de la zone d'observation 2 sans avoir, pour ce faire, à émettre d'impulsions acoustiques, en particulier dans la zone fréquentielle audible.

Un tel système est donc sensiblement différent d'un système acoustique ultrasonore tels que ceux utilisés par exemple en échographie, ces derniers fonctionnant à beaucoup plus haute fréquence et étant usuellement des systèmes actifs qui émettent des signaux acoustiques dans la zone d'observation.

Un tel système selon l'invention est ainsi plus proche d'une caméra thermique, dans son utilisation et dans son principe général de fonctionnement.

Le système passif d'imagerie acoustique large bande 1 comporte un dispositif passif d'acquisition acoustique 3, une unité de traitement numérique 4 et un moyen d'affichage 5.

Le dispositif passif d'acquisition acoustique 3 comprend une pluralité 6 de capteur microphoniques 7.

Chacun des capteurs 7 est apte à générer au moins un signal électrique 8 représentatif d'une pression acoustique 9 reçue par le capteur microphonique 7.

Les signaux électriques 8 peuvent en particulier être des signaux électriques analogiques.

Les capteurs microphoniques 7 peuvent être de tout type connu. En particulier, les capteurs 7 peuvent être des transducteurs fonctionnant dans la zone fréquentielle audible, par exemple entre 20 Hz à 20 000 Hz.

Les capteurs 7 peuvent par exemple être des transducteurs électromagnétiques (dans lesquels une pression acoustique 9 ou un gradient de pression acoustique 9 met en mouvement une membrane placée dans un champ magnétique), électrostatiques (dans lesquels une pression acoustique 9 ou un gradient de pression acoustique 9 met en mouvement une membrane dont le déplacement induit une variation de capacité d'un condensateur), piézo-électriques (dans lesquels une capsule comprenant un composé piézo-électrique réalise un condensateur variable qui traduit une pression acoustique 9 en une tension aux bornes d'une résistance de charge) ou tout autre type de capteur microphonique connu.

Dans le mode de réalisation des figures 1 à 3, la pluralité 6 de capteurs microphoniques 7 comprend huit capteurs microphoniques 7.

En variante, le nombre de capteurs microphoniques 7 peut par exemple être compris entre trois et seize, le nombre de capteurs microphoniques étant de préférence supérieur ou égal à six et inférieur ou égal à douze.

En outre, les capteurs 7 couvrent une surface 10 restreinte, en particulier, dans l'exemple des figures 1 à 3, la distance maximale L1 entre deux capteurs 7 de la pluralité 6 de capteurs microphoniques 7 est sensiblement égale à vingt centimètres.

C'est-à-dire que pour tout premier capteur 7a choisi parmi la pluralité 6 de capteurs microphoniques 7 et tout second capteur 7b choisi parmi la pluralité 6 de capteurs microphoniques 7, la distance maximale L1 entre le premier capteur et le second capteur est sensiblement égale à vingt centimètres.

En variante, la distance maximale L1 entre le premier capteur et le second capteur peut être inférieure ou égale à cinquante centimètres, et de préférence inférieure ou égal à trente-cinq centimètres.

Enfin, les capteurs 7 sont espacés les uns des autres, c'est-à-dire qu'ils sont séparés par une distance minimale L2 supérieure ou égale à quatre centimètres.

Ainsi, pour tout premier capteur 7a choisi parmi la pluralité 6 de capteurs microphoniques 7 et tout second capteur 7c choisi parmi la pluralité 6 de capteurs microphoniques 7, une distance minimale L2 entre le premier capteur 7a et le second capteur 7c est supérieure ou égale à quatre centimètres.

En conséquence, le nombre de capteurs microphoniques 7 est peu élevé et la surface 10 sur laquelle s'étend la pluralité 6 de capteurs microphoniques 7 est restreinte ce qui permet d'obtenir un système passif d'imagerie acoustique 1 compacte.

L'électronique du système passif d'imagerie acoustique 1 est en outre simplifiée et allégée ce qui permet que le système passif d'imagerie acoustique 1 soit portable et léger

Ainsi par exemple, le système passif d'imagerie acoustique large bande 1 peut présenter un encombrement d'épaisseur faible, ledit encombrement d'épaisseur étant considéré selon une direction d'épaisseur par exemple sensiblement perpendiculaire à la surface 10 sur laquelle s'étend la pluralité 6 de capteurs microphoniques 7. Ledit encombrement d'épaisseur est ainsi un encombrement cumulé de tous les éléments du système passif d'imagerie acoustique large bande 1 et en particulier du dispositif passif d'acquisition acoustique 3, de l'unité de traitement numérique 4 et du moyen d'affichage 5. Plus particulièrement, l'encombrement d'épaisseur du système passif d'imagerie acoustique large bande 1 peut être inférieur à vingt centimètres, de préférence inférieur à dix centimètres, de façon encore plus préférentielle inférieur à cinq centimètres.

Le système passif d'imagerie acoustique peut ainsi être déplacé aisément par un opérateur et permettre une exploration facilitée de zones encombrées.

Dans le mode de réalisation de l'exemple des figures 1 à 3, la pluralité 6 de capteurs microphoniques 7 est telle que les capteurs 7 sont sensiblement disposés sur un cercle 11.

De cette façon, le nombre de distances différentes séparant deux capteurs 7 parmi la pluralité 6 de capteurs microphoniques 7 est élevé ce qui augmente la résolution du système passif d'imagerie acoustique large bande 1.

D'autres formes pour la disposition 11 des capteurs 7 pourront également être employées comme des carrés, des polygones ou d'autres formes présentant des symétries.

En variante, des formes non symétriques pourront également être employées comme par exemple des spirales.

Dans un autre mode de réalisation, des capteurs 7 parmi la pluralité 6 de capteurs microphoniques 7 sont disposés à l'intérieur dudit cercle 11 de façon à discrétiser davantage la surface 10 sur laquelle s'étend la pluralité 6 de capteurs microphoniques 7.

Le dispositif passif d'acquisition acoustique 3 comporte également une électronique de conditionnement et de numérisation 12 des signaux électriques 8.

L'électronique de conditionnement et de numérisation 12 est apte à adapter les signaux électriques 8 générés par les capteurs microphoniques 7 et à les transformer en signaux numériques 13 de pression acoustique 9.

Ainsi, en particulier, l'électronique de conditionnement et de numérisation 12 réalise le conditionnement des signaux électriques analogiques 8.

Selon les modes de réalisation de l'invention, l'électronique de conditionnement et de numérisation 12 peut donc réaliser une ou plusieurs opérations parmi l'amplification des signaux électriques 8, le préfiltrage des signaux électriques 8, l'isolation galvanique des capteurs 7 et l'excitation des capteurs 7.

L'électronique de conditionnement et de numérisation 12 transforme en outre les signaux électriques 8 en signaux numériques 13 de pression acoustique 9, par exemple au moyen de convertisseurs analogiques-numériques.

Dans un mode de réalisation de l'invention, l'électronique de conditionnement et de numérisation 12 peut être intégrée au capteur microphonique 7, par exemple pour former un capteur numérique unissant un capteur microphonique acoustique et une interface à base de circuit intégrés.

Le dispositif passif d'acquisition acoustique 3 comporte encore une électronique de transfert 14 apte à communiquer avec l'unité de traitement numérique 4.

L'électronique de transfert 14 permet le transfert des signaux numériques 13 de pression acoustique 9 de l'électronique de conditionnement et de numérisation 12 à l'unité de traitement numérique 4.

L'électronique de transfert 14 peut également permettre le contrôle du dispositif passif d'acquisition acoustique 3, et en particulier de l'électronique de conditionnement et de numérisation 12, par l'unité de traitement numérique 4.

Dans le mode de réalisation des figures 1 à 3, l'électronique de transfert 14 est une électronique de transfert filiaire comportant un connecteur 15 et apte à communiquer avec l'unité de traitement numérique 4 par un câble d'interconnexion 16.

En variante, l'électronique de transfert 14 peut être une électronique de transfert sans fil comportant une antenne ou un émetteur-récepteur optique et apte à communiquer avec l'unité de traitement numérique 4 au moyen d'une liaison sans fil, en particulier d'une liaison sans fil radiofréquence ou d'une liaison sans fil optique.

Le dispositif passif d'acquisition acoustique 3 comporte enfin un élément support rigide multifonctionnel 17 sur lequel sont montés les capteurs microphoniques 7 et l'électronique de transfert 14.

L'élément support rigide multifonctionnel 17 intègre en outre l'électronique de conditionnement et de numérisation 12.

Dans l'exemple des figures 1 à 3, l'élément support rigide multifonctionnel 17 comporte deux coques rigides 18, 19 fixées en regard l'une de l'autre et enfermant entre elles l'électronique de conditionnement et de numérisation 12.

Dans un mode de réalisation alternatif, l'élément support rigide multifonctionnel 17 peut comporter une unique coque rigide dans laquelle est logée l'électronique de conditionnement et de numérisation 12.

La ou les coques rigides 18, 19, de l'élément support rigide multifonctionnel 17 peuvent en outre être ajourées pour réduire le poids du dispositif passif d'acquisition acoustique 3.

Dans l'exemple des figures 1 à 3, l'élément support rigide multifonctionnel 17 comporte une pluralité 20 de logements 21.

Chaque capteur 7 parmi la pluralité 6 de capteurs microphoniques 7 est monté dans un logement associé 21 parmi la pluralité 20 de logements 21.

L'élément support rigide multifonctionnel 17 peut également comporter un moyen d'association 22 de l'unité de traitement numérique 4 apte à fixer de façon rigide l'unité de traitement numérique 4 à l'élément support rigide multifonctionnel 17.

Avantageusement, le moyen d'association 22 de l'unité de traitement numérique 4 peut être un moyen détachable, en particulier un moyen détachable aisément par un utilisateur du système passif d'imagerie acoustique large bande 1.

Le moyen d'association 22 de l'unité de traitement numérique 4 peut par exemple comporter une bande de velcro, ou un mécanisme d'emboîtement commandable par un utilisateur.

Ainsi, dans l'exemple des figures 1 à 3, le moyen d'association 22 comporte des bandes autoagrippantes 22a, 22b adaptées respectivement pour être fixées les unes 22a sur l'unité de traitement numérique 4 et les autres 22b sur l'élément support rigide multifonctionnel 17.

L'unité de traitement numérique 4 peut donc être fixée de façon rigide à l'élément support rigide multifonctionnel 17.

Le système passif d'imagerie acoustique large bande 1 constitue alors un ensemble unique, rigide et compacte, pouvant être transporté d'une seule main par un utilisateur.

A cette fin, l'élément support rigide multifonctionnel 17 peut comporter un moyen de préhension 23 apte à permettre la prise en main et le portage à une ou deux mains du dispositif d'acquisition acoustique 3.

Le moyen de préhension 23 peut en particulier comporter une ou des zones 24 d'une ou des coques rigides 18, 19 renforcées si besoin par des renforts internes aux coques rigides 18, 19.

Enfin, l'élément support rigide multifonctionnel 17 peut comporter un moyen de fixation 25 à un support externe, en particulier à un support tripode.

Le dispositif passif d'acquisition acoustique 3 de l'exemple des figures 1 à 3 comporte en outre deux capteurs de distance 26 intégrés à l'élément support rigide multifonctionnel 17.

Les capteurs de distance 26 peuvent être des capteurs de distance optiques intégrés à l'élément support rigide multifonctionnel.

En variante, les capteurs de distance 26 peuvent être des capteurs à ultrasons ou des capteurs laser.

L'électronique de transfert 14 peut ainsi être apte à transférer des informations de distance 27 obtenues par les capteurs de distance 26 à l'unité de traitement numérique 4.

Le dispositif passif d'acquisition acoustique 3 peut comporter une source d'alimentation électrique autonome 28 intégrée à l'élément support rigide multifonctionnel 17.

Une telle source d'alimentation électrique autonome 28 peut en particulier être une batterie.

En variante, un câble d'alimentation, par exemple le câble d'interconnexion 16, peut permettre l'alimentation en énergie électrique du dispositif passif d'acquisition acoustique 3 par l'unité de traitement numérique 4.

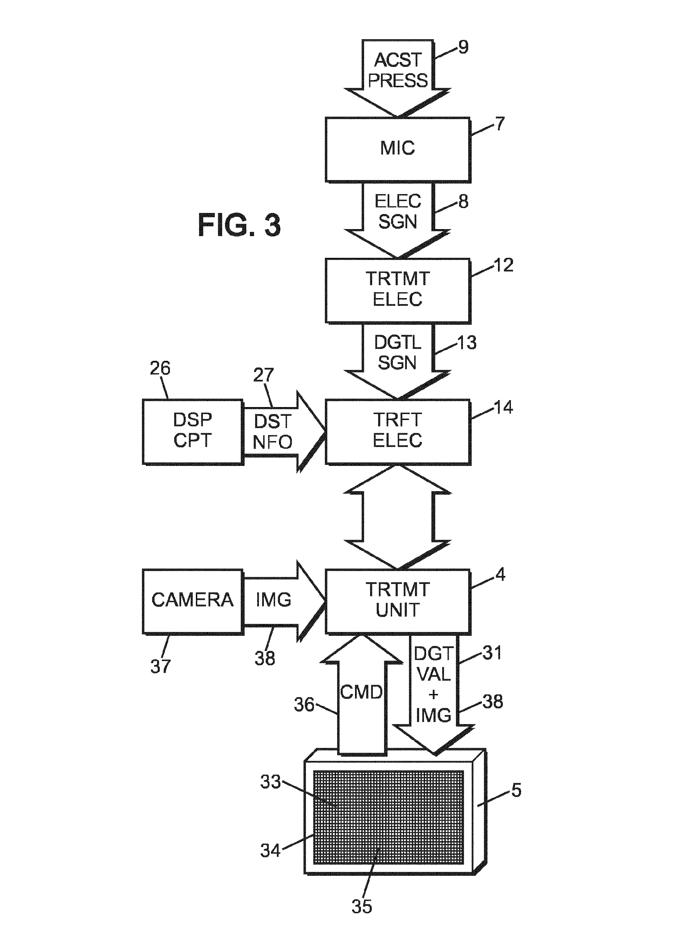

En référence à la figure 3, le dispositif passif d'acquisition acoustique 3 est donc à même d'acquérir des signaux électriques 8 représentatifs de pressions acoustiques 9 reçues par la pluralité 6 de capteurs microphoniques 7, de les adapter et de les transformer en signaux numériques 13 de pression acoustique 9 au moyen de l'électronique de conditionnement et de numérisation 12, et de transférer les signaux numériques 13 à l'unité de traitement numérique 4 au moyen de l'électronique de transfert 14.

L'unité de traitement numérique 4 reçoit ainsi les signaux numériques 13 du dispositif passif d'acquisition acoustique 3.

L'unité de traitement numérique 4 détermine ensuite, et mémorise, pour chacun des points 29 d'une pluralité 30 de points 29 de la zone d'observation 2, au moins une valeur numérique 31 de niveau de pression acoustique 32 en ce point 29 à partir des signaux numériques 13.

On entend ici par « valeur numérique de niveau de pression » une grandeur numérique représentative de la pression au niveau du point considéré.

En particulier, cette grandeur numérique peut être exprimée en unités de pression (par exemple des Pascals), de niveau acoustique (par exemple des décibels), en unités psycho-acoustiques comme le Sone, le Phone ou encore l'Acum ou en tout autre unité appropriée à quantifier une pression, un niveau de pression acoustique ou même une dérivée ou une intégration temporelle d'une pression acoustique.

Pour cela l'unité de traitement numérique 4 met par exemple en oeuvre un algorithme d'holographie acoustique et/ou de formation de voie (en anglais « beamforming »).

Le moyen d'affichage 5 affiche alors un maillage 33 des valeurs numériques 31 de niveau de pression acoustique 32 associées à chaque point 29 de la zone d'observation 2.

Ainsi par exemple, le moyen d'affichage 5 affiche, pour chaque valeur numérique 31, un ou plusieurs pixels 34 dont la couleur et/ou l'intensité lumineuse sont fonctions de la valeur numérique 31 associée.

Une échelle de niveaux de gris ou de couleurs peut par exemple permettre de représenter les valeurs numériques 31.

Le moyen d'affichage 5 peut comporter un écran tactile 35 sur lequel l'utilisateur peut entrer des commandes 36, de façon à permettre la communication de commandes 36 à l'unité de traitement numérique 4.

L'électronique de transfert 14 peut en outre permettre la transmission des commandes 36 ou de commandes définies par l'unité de traitement numérique 4 depuis l'unité de traitement numérique 4 au dispositif passif d'acquisition acoustique 3, et en particulier à l'électronique de conditionnement et de numérisation 12.

Le système passif d'imagerie acoustique 1 de l'exemple des figures 1 à 3 comporte en outre un moyen d'acquisition d'images photographiques 37 permettant d'obtenir au moins une image photographique 38 de la zone d'observation 2.

Le moyen d'acquisition d'images photographiques 37 peut par exemple être une caméra numérique.

Le moyen d'affichage 5 est en outre apte à afficher l'image photographique 38 de la zone d'observation 2 et le maillage 33 des valeurs numériques 31 de niveau de pression acoustique 32.

Le moyen d'affichage 5 peut par exemple afficher le maillage 33 sous forme d'une palette de couleurs ou de niveau de gris superposée à l'image photographique 38.

Dans le mode de réalisation des figures 1 à 3, le moyen d'acquisition d'images photographiques 37 et la pluralité 6 de capteur microphoniques 7 sont respectivement disposés sur des faces opposées 39, 40 de l'élément support rigide multifonctionnel 17.

L'élément support rigide multifonctionnel 17 peut alors comporter une ouverture traversante 41, placée en regard du moyen d'acquisition d'images photographiques 37 et permettant au moyen d'acquisition d'images photographiques 37 d'acquérir une image de la zone d'observation 2.

L'ouverture traversante 41 est, en particulier, avantageuse lorsque la zone d'observation 2 est située du coté de la face 39 de l'élément support rigide multifonctionnel 17 opposée à la face sur laquelle est fixée l'unité de traitement numérique 4 et le moyen d'acquisition d'images photographiques 37.

Dans un mode de réalisation avantageux, un appareil mobile 42 comporte l'unité de traitement numérique 4, le moyen d'affichage 5 et le moyen d'acquisition d'images photographiques 37.

L'appareil mobile 42 peut par exemple être un smartphone ou téléphone mobile, un ordinateur portable, une tablette tactile ou tout autre appareil transportable comportant un processeur, un écran et une caméra.

De cette façon, le système passif d'imagerie acoustique 1 peut employer les technologies compactes aisément disponibles.

L'appareil mobile 42 peut en particulier comporter une source d'alimentation électrique autonome 43, par exemple une batterie.

Ainsi, dans le mode de réalisation des figures 1 à 3, l'appareil mobile 42 et la pluralité 6 de capteur microphoniques 7 sont respectivement disposés sur des faces opposées 39, 40 de l'élément support rigide multifonctionnel 17.
Dans un mode de réalisation de l'invention, le dispositif passif d'acquisition acoustique 3 est alimenté en énergie électrique par l'unité de traitement numérique 4, par exemple l'appareil mobile 42.

## Revendications

1. Dispositif passif d'acquisition acoustique large bande (3) apte à communiquer avec une unité de traitement numérique (4), le dispositif comportant
une pluralité de capteurs microphoniques (7), chacun des capteurs étant apte à générer un signal électrique (8) représentatif d'une pression acoustique (9) reçue par ledit capteur microphonique,
une électronique de conditionnement et de numérisation (12) des signaux électriques apte à adapter les signaux électriques générés par les capteurs microphoniques et à les transformer en signaux numériques (13) de pression acoustique,
une électronique de transfert (14) apte à communiquer avec une unité de traitement numérique (4) et permettre le transfert des signaux numériques de pression acoustique de l'électronique de conditionnement et de numérisation à ladite unité de traitement numérique,
le dispositif d'acquisition acoustique étant **caractérisé en ce que** les capteurs microphoniques et l'électronique de transfert sont montés sur un élément support rigide multifonctionnel (17) intégrant l'électronique de conditionnement et de numérisation.

2. Dispositif passif d'acquisition acoustique selon la revendication 1 dans lequel la pluralité de capteurs microphoniques (7) comprend un nombre de capteurs microphoniques supérieur ou égal à trois et inférieur ou égal à seize, le nombre de capteurs microphoniques étant de préférence supérieur ou égal à six et inférieur ou égal à douze, le nombre de capteurs microphoniques étant de préférence sensiblement égal à huit.

3. Dispositif passif d'acquisition acoustique selon l'une quelconque des revendications 1 à 2 dans lequel, pour tout premier capteur choisi parmi la pluralité de capteurs microphoniques (7) et tout second capteur choisi parmi la pluralité de capteurs microphoniques,
- une distance maximale (L1) entre le premier capteur et le second capteur est inférieure ou égale à cinquante centimètres, ladite distance maximale étant de préférence inférieure ou égal à trente-cinq centimètres, ladite distance maximale étant de préférence sensiblement égale à vingt centimètres, et/ou
- une distance minimale (L2) entre le premier capteur et le second capteur est supérieure ou égale à quatre centimètres.

4. Dispositif passif d'acquisition acoustique selon l'une quelconque des revendications 1 à 3 dans lequel des capteurs parmi la pluralité de capteurs microphoniques (7) sont sensiblement disposés sur un cercle (11).

5. Dispositif passif d'acquisition acoustique selon l'une quelconque des revendications 1 à 4,
dans lequel l'élément support rigide multifonctionnel (17) comporte une pluralité de logements (21),
et dans lequel chaque capteur parmi la pluralité de capteurs microphoniques (7) est monté dans un logement associé parmi la pluralité de logements.

6. Dispositif passif d'acquisition acoustique selon l'une des revendications 1 à 5, comportant en outre au moins un capteur de distance (26) intégré à l'élément support rigide multifonctionnel (17).

7. Dispositif passif d'acquisition acoustique selon l'une quelconque des revendications 1 à 6 dans lequel l'élément support rigide multifonctionnel (17) comporte un moyen d'association (22) d'une unité de traitement numérique (4) apte à fixer de façon rigide une unité de traitement numérique à l'élément support rigide multifonctionnel.

8. Dispositif passif d'acquisition acoustique selon l'une quelconque des revendications 1 à 7 comportant l'un des éléments suivants :
- l'élément support rigide multifonctionnel (17) comporte une coque rigide (18) dans laquelle est logée l'électronique de conditionnement et de numérisation (12),
- l'élément support rigide multifonctionnel (17) comporte deux coques rigides (18, 19) fixées en regard l'une de l'autre et enfermant entre elles l'électronique de conditionnement et de numérisation (12),.et/ou
- l'élément support rigide multifonctionnel (17) est ajouré.

9. Dispositif passif d'acquisition acoustique selon l'une quelconque des revendications 1 à 8 dans lequel l'élément support rigide multifonctionnel (17) comporte au moins l'un des éléments suivants :
- un moyen de préhension (23) apte à permettre la prise en main et le portage à une ou deux mains du dispositif d'acquisition acoustique (3), en particulier une ou des zones (24) d'une ou des coques rigides (18, 19),
- un moyen de fixation (25) à un support externe, en particulier à un support tripode, et/ou
- une source d'alimentation électrique autonome (28) intégrée à l'élément support rigide multifonctionnel (17), en particulier une batterie.

10. Dispositif passif d'acquisition acoustique selon l'une quelconque des revendications 1 à 9 dans lequel l'électronique de transfert (14) est
soit une électronique de transfert filiaire comportant un connecteur (15) et apte à communiquer avec l'unité de traitement numérique (4) par un câble d'interconnexion (16),
soit une électronique de transfert sans fil comportant une antenne ou un émetteur-récepteur optique et apte à communiquer avec l'unité de traitement numérique au moyen d'une liaison sans fil, en particulier d'une liaison sans fil radiofréquence ou d'une liaison sans fil optique.

11. Système passif d'imagerie acoustique large bande (1) d'une zone d'observation (2), le système comportant
un dispositif passif d'acquisition acoustique (3) selon l'une des revendications 1 à 10,
une unité de traitement numérique (4) adaptée pour recevoir des signaux numériques de pression acoustique (13) du dispositif passif d'acquisition acoustique et pour déterminer et mémoriser, pour chacun des points d'une pluralité de points (29) de la zone d'observation (2), au moins une valeur numérique (31) de niveau de pression acoustique (32) en ce point à partir des signaux numériques de pression acoustique, et
un moyen d'affichage (5) d'un maillage (33) des valeurs numériques de niveau de pression acoustique associées à chaque point de la zone d'observation.

12. Système passif d'imagerie acoustique selon la revendication 11, comportant l'un des éléments suivants :
- l'unité de traitement numérique (4) est fixée de façon rigide à l'élément support rigide multifonctionnel (17),
- un encombrement d'épaisseur du système passif d'imagerie acoustique large bande est inférieur à vingt centimètres, de préférence inférieur à dix centimètres, de façon encore plus préférentielle inférieur à cinq centimètres, et/ou
le dispositif passif d'acquisition acoustique (3) est alimenté en énergie électrique par l'unité de traitement numérique (4).

13. Système passif d'imagerie acoustique selon l'une des revendications 11 et 12, dans lequel le moyen d'affichage (5) comporte un écran tactile (35) apte à permettre la communication de commandes (36) à l'unité de traitement numérique (4).

14. Système passif d'imagerie acoustique selon l'une des revendications 11 à 13, comportant en outre un moyen d'acquisition d'images photographiques (37) pour obtenir au moins une image photographique (38) de la zone d'observation (2),
et dans lequel le moyen d'affichage (5) est apte à afficher l'image photographique de la zone d'observation et le maillage (33) des valeurs numériques (31) de niveau de pression acoustique, en particulier sous forme d'une palette de couleurs ou de niveau de gris associée au maillage des valeurs numériques et superposée avec l'image photographique.

15. Système passif d'imagerie acoustique selon la revendication 14, dans lequel un appareil mobile (42) comporte l'unité de traitement numérique (4), le moyen d'affichage (5) et le moyen d'acquisition d'images photographiques (37), l'appareil mobile comportant une source d'alimentation électrique autonome, en particulier une batterie (43), préférentiellement dans lequel l'appareil mobile (42) et la pluralité de capteur microphoniques (7) sont respectivement disposés sur des faces opposées (39, 40) de l'élément support rigide multifonctionnel (17), l'élément support rigide multifonctionnel comportant une ouverture traversante (41) en regard du moyen d'acquisition d'images photographiques (37) apte à permettre au moyen d'acquisition d'images photographiques d'acquérir une image photographique (38) de la zone d'observation (2).
